# EUROPÄISCHE PATENTSCHRIFT

(11) **EP 2 560 848 B1**
(45) Veröffentlichungstag und Bekanntmachung des Hinweises auf die Patenterteilung: **25.09.2019**
(21) Anmeldenummer: 11707383.3
(22) Anmeldetag: 25.02.2011
(51) Int. Cl.: B60S 1/38

(54) **WISCHBLATT FÜR EINEN SCHEIBENWISCHER**
WIPER BLADE FOR A WINDSCREEN WIPER
BALAI D'ESSUIE-GLACE POUR UN ESSUIE-GLACE

(30) Priorität: 22.04.2010 DE 102010028102
(43) Veröffentlichungstag der Anmeldung: 27.02.2013
(73) Patentinhaber: Robert Bosch GmbH, 70442 Stuttgart (DE)
(72) Erfinder: WEIDLICH, Jochen, 76437 Rastatt (DE)
(86) Internationale Anmeldenummer: PCT/EP2011/052780
(87) Internationale Veröffentlichungsnummer: WO 2011/131395

(56) Entgegenhaltungen:
- EP-B1- 1 359 073
- EP-B1- 1 745 997
- WO-A1-2010/086064
- DE-A1-102009 002 411
- US-A1- 2001 004 783
- US-B2- 7 523 522

## Beschreibung

### Stand der Technik

Die vorliegende Erfindung betrifft ein Wischblatt für einen Scheibenwischer, mit einer Wischleiste, an der mindestens eine Tragschiene angeordnet ist, die ein mit einer Kunststoffummantelung versehenes Federelement aufweist, und mit einer Basisanschlussvorrichtung, die Kunststoff aufweist und an die Kunststoffummantelung angeschweißt ist.

Die US 7,523,522 B2 beschreibt ein derartiges Wischblatt mit einer Basisanschlussvorrichtung, die ein plattenförmiges Trägerteil mit daran angeformten Haltekrallen aufweist. Die Haltekrallen umgreifen zumindest abschnittsweise zugeordnete Tragschienen des Wischblatts. In dem plattenförmigen Trägerteil sind vier zylinderförmige Vertiefungen ausgebildet, in die zylinderförmige Schweißwerkzeuge, sogenannte Stabsonotroden, zum Verschweißen der Basisanschlussvorrichtung mit den Tragschienen mittels Ultraschallschweißen einführbar sind. Diese Stabsonotroden ermöglichen ein punktförmiges Verschweißen der Tragschienen mit den Haltekrallen und der Unterseite des plattenförmigen Trägerteils im Bereich der zylinderförmigen Vertiefungen.

Nachteilig an diesem Stand der Technik ist, dass die Verschweißung nur an vier vorgegebenen Schweißpunkten erfolgt und somit problematisch beim Auftreten von Scherkräften in einer Richtung entlang der Tragschienen ist. Darüber hinaus verhindert die punktförmige Formgebung einer derartigen Verschweißung eine optimale Übertragung der Kräfte eines entsprechenden Wischerarms auf eine dem Wischblatt zugeordnete Wischleiste und somit auf deren Wischlippe. Insbesondere wird durch diese Formgebung der Verschweißung eine Auflagekraftverteilung der Wischlippe auf einer zugeordneten Scheibe, die maßgeblich für ein gewünschtes Wischergebnis ist, negativ beeinflusst.

### Offenbarung der Erfindung

Eine Aufgabe der Erfindung ist es daher, ein neues Wischblatt für einen Scheibenwischer bereit zu stellen, bei dem eine verbesserte Auflagekraftverteilung für eine dem Wischblatt zugeordnete Wischlippe auf einer Scheibe erreicht werden kann.

Dieses Problem wird gelöst durch ein Wischblatt für einen Scheibenwischer, mit einer Wischleiste, an der mindestens eine Tragschiene angeordnet ist, die ein mit einer Kunststoffummantelung versehenes Federelement aufweist, und mit einer Basisanschlussvorrichtung, die Kunststoff aufweist und an die Kunststoffummantelung angeschweißt ist. Zwischen der Basisanschlussvorrichtung und der mindestens einen Tragschiene ist eine flächige Schweißnaht ausgebildet.

Die Erfindung ermöglicht somit die Bereitstellung eines Wischblatts, das eine verbesserte Kraftübertragung von einem zugeordneten Wischerarm auf die Wischleiste bzw. eine dem Wischblatt zugeordnete Wischlippe bei einer vergleichsweise geringen Streuung von Abzugskräften ermöglicht.

Gemäß einer Ausführungsform erstreckt sich die flächige Schweißnaht im Wesentlichen bandartig über eine der Basisanschlussvorrichtung zugeordnete Längserstreckung.

Somit kann eine stabile Verschweißung der Basisanschlussvorrichtung an der Tragschiene zur Erzielung einer verbesserten Auflagekraftverteilung erreicht werden.

Bevorzugt ist die mindestens eine Tragschiene bandartig mit Breitseiten und Schmalseiten ausgebildet. Die flächige Schweißnaht ist vorzugsweise an einer der Breitseiten ausgebildet.

Somit kann eine vergleichsweise großflächige Verschweißung der Basisanschlussvorrichtung an der Tragschiene erreicht werden.

Gemäß der Erfindung weist die Basisanschlussvorrichtung einen Grundkörper auf, an dem laterale Halteglieder vorgesehen sind, die die mindestens eine Tragschiene zumindest abschnittsweise krallenartig umgreifen.

Die Erfindung ermöglicht somit die Bereitstellung einer einfachen und stabilen Basisanschlussvorrichtung.

Die flächige Schweißnaht ist zwischen einer vom Grundkörper abgewandten Breitseite der mindestens einen Tragschiene und einem der Tragschiene zugewandten Verbindungsabschnitt des lateralen Halteglieds ausgebildet.

Somit kann eine sichere und zuverlässige Befestigung der Basisanschlussvorrichtung an der Tragschiene erreicht werden.

Gemäß der Erfindung weist der Grundkörper mindestens eine Durchgriffsöffnung auf, die dazu ausgebildet ist, bei einem Verschweißen der Basisanschlussvorrichtung mit der Kunststoffummantelung der mindestens einen Tragschiene ein Durchführen eines Schweißwerkzeugs durch den Grundkörper bis zur mindestens einen Tragschiene zu ermöglichen.

Die Erfindung ermöglicht somit eine präzise Energieabgabe im Bereich der Durchgriffsöffnung zur Schmelzeerzeugung und somit eine definierte und kontrollierte Schmelzeerzeugung in diesem Bereich.

Die mindestens eine Tragschiene ist bevorzugt durch Ultraschallschweißen mit der Basisanschlussvorrichtung verschweißt.

Somit kann die Tragschiene vergleichsweise schnell und zuverlässig mit der Basisanschlussvorrichtung verschweißt werden.

An der Basisanschlussvorrichtung ist eine Kunststoff aufweisende Adaptereinheit zur Anlenkung der Wischleiste an einem Wischerarm angeschweißt. Die Adaptereinheit ist vorzugsweise zur Verbindung mit einem dem Wischerarm zugeordneten Anschlussglied ausgebildet.

Somit kann die Wischleiste auf einfache Art und Weise mit dem Wischerarm verbunden werden.

Die Adaptereinheit weist mindestens einen in die mindestens eine Durchgriffsöffnung eingreifenden Vorsprung auf.

Somit kann eine stabile Verbindung zwischen Adaptereinheit und Basisanschlussvorrichtung erreicht werden, wobei auf einfache Art und Weise ein Niederhalten der Tragschiene im Betrieb des Wischblatts bewirkt wird.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine Seitenansicht eines Wischblatts mit einer Wischleiste, an der eine Basisanschlussvorrichtung mittels Ultraschallschweißen befestigt ist, gemäß einer Ausführungsform,
Fig. 2 eine teilweise geschnittene Vorderansicht der Basisanschlussvorrichtung von Fig. 1 in Richtung des Pfeils II von Fig. 1,
Fig. 3 eine perspektivische Ansicht der Basisanschlussvorrichtung von Fig. 2 bei einem Verschweißen mit zugeordneten Tragschienen, und
Fig. 4 eine teilweise geschnittene Ansicht der an den Tragschienen angeschweißten Basisanschlussvorrichtung von Fig. 3 mit der Adaptereinheit von Fig. 1 in Richtung des Pfeils IV von Fig. 1.

### Beschreibung der Ausführungsbeispiele

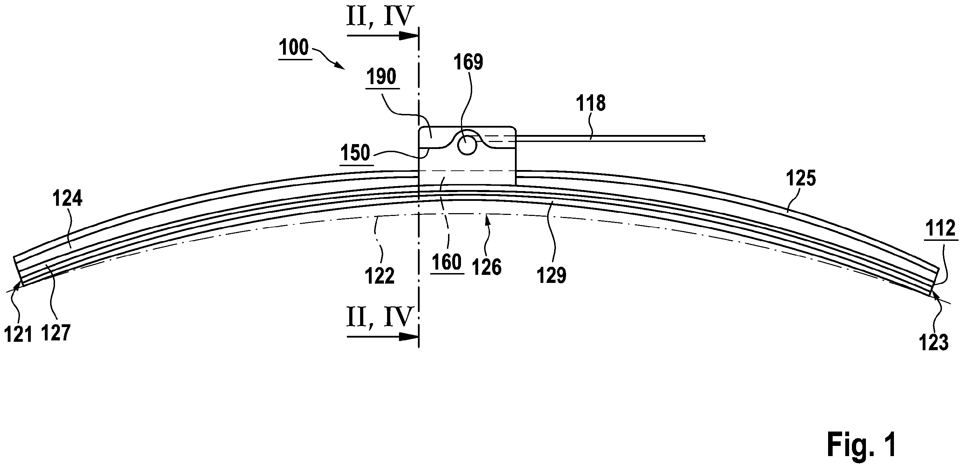

Fig. 1 zeigt ein Wischblatt 100 mit einer Wischleiste 112, die eine über einen Kippsteg 127 mit einer Rückenleiste 124 verbundene Wischlippe 129 aufweist. An der Rückenleiste 124 ist ein Spoiler 125 vorgesehen. An der Wischleiste 112 ist eine Basisanschlussvorrichtung 160 vorgesehen, an der eine Adaptereinheit 150 zum Anschließen eines einem Wischerarm 118 zugeordneten Anschlussglieds 190 befestigt ist. Das auch als Haltefeder bezeichnete Anschlussglied 190 ist in Fig. 1 beispielhaft über einen Gelenkbolzen 169 an der auch als Funktionsadapter bezeichneten Adaptereinheit 150 angeschlossen. Mit Hilfe des Wischerarms 118 kann das Wischblatt 100 zum Wischen über eine strichpunktiert dargestellte Scheibe 122, z.B. eine Kraftfahrzeugscheibe, geführt werden.

Es wird jedoch darauf hingewiesen, dass die Ausgestaltung des Wischblatts 100 mit Basisanschlussvorrichtung 160 und Adaptereinheit 150 zum Anschließen des Anschlussglieds 190 lediglich beispielhaften Charakter hat und nicht als Einschränkung der Erfindung zu verstehen ist. Vielmehr sind auch alternative Ausgestaltungen möglich, die ebenfalls im Rahmen der vorliegenden Erfindung liegen, z. B. können die Basisanschlussvorrichtung 160 und die Adaptereinheit 150 einstückig ausgebildet sein oder die Adaptereinheit 150 und das Anschlussglied 190 können einstückig ausgebildet sein. Darüber hinaus ist auch der Spoiler 125 optional, sodass die vorliegende Erfindung auch bei Wischblättern ohne Spoiler Anwendung finden kann.

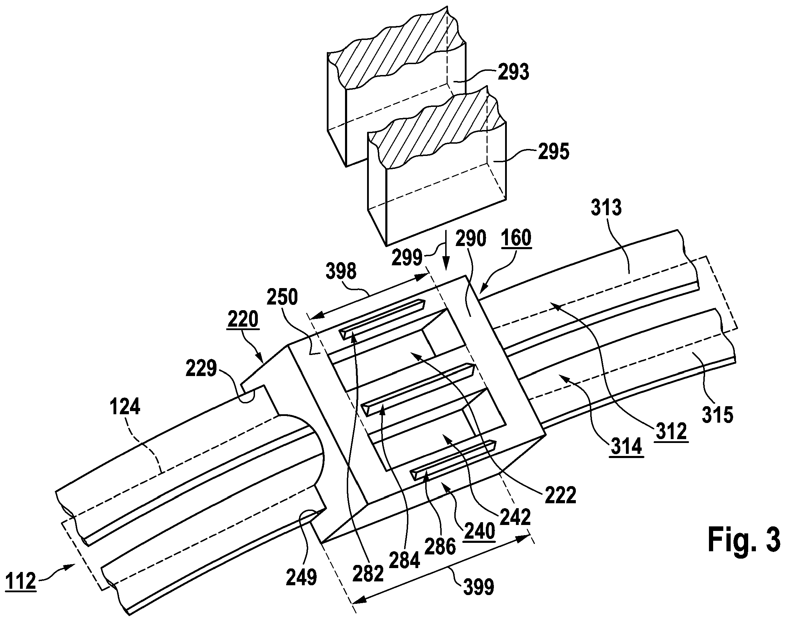

Gemäß einer Ausführungsform ist das Wischblatt 100 in Flachbalkenbauweise ausgebildet, d.h. die Wischleiste 112 weist seitliche Längsnuten auf, in denen zwei Tragschienen (312, 314 in Fig. 3), vorzugsweise Federschienen, angeordnet sind, wie beispielhaft unten bei Fig. 3 beschrieben. Hierbei können die Tragschienen (312, 314 in Fig. 3) an ihren axialen Enden z. B. über geeignete Endkappen miteinander verbunden sein. Alternativ hierzu kann die Wischleiste 112 als Hohlprofil mit einem etwa zentralen Längskanal ausgebildet sein, in dem eine einzelne Tragschiene angeordnet ist. Derartige Wischblätter und deren Ausgestaltungen sind dem Fachmann hinreichend bekannt, sodass hier zwecks Knappheit der Beschreibung auf eine eingehende Beschreibung verzichtet wird.

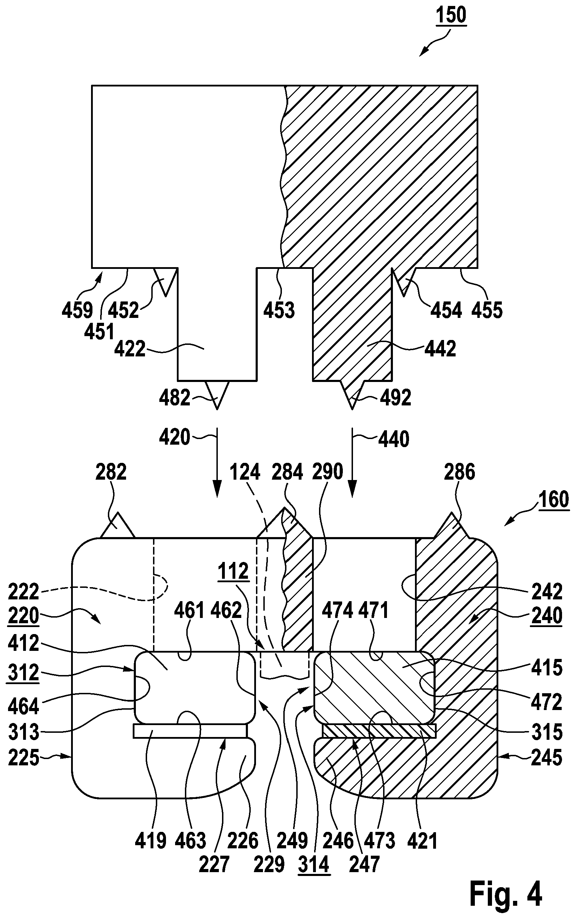

Die Wischleiste 112 mit der daran vorgesehenen Basisanschlussvorrichtung 160 ist bevorzugt gelenkfrei ausgebildet, wobei die Basisanschlussvorrichtung 160 vorzugsweise an der Wischleiste 112 vormontiert ist. Gemäß einer Ausführungsform ist die Basisanschlussvorrichtung 160 durch einen geeigneten Schweißvorgang, z. B. einen Ultraschall-Schweißvorgang, an die Tragschienen (312, 314 in Fig. 3) angeschweißt und die Adaptereinheit 150 ist an die Basisanschlussvorrichtung 160 angeschweißt, wie unten bei Fig. 3 und 4 beschrieben. Hierzu weisen die Basisanschlussvorrichtung 160 und die Adaptereinheit 150 Kunststoff auf und können auch als Kunststoffteile ausgebildet sein, z. B. mittels Kunststoffspritzen.

In Fig. 1 ist das Wischblatt 100 noch nicht vollständig auf die Scheibe 122 aufgesetzt, es liegen nur dessen axiale Wischblattenden 121, 123 an der Scheibe 122 an, während die Wischleiste 112 in Wischblattmitte 126, d.h. etwa im Bereich der Adaptereinheit 150, noch von der Scheibe 122 beabstandet ist. Wird über den Wischerarm 118 eine vorgesehene Anpresskraft auf das Anschlussglied 190 und somit die Adaptereinheit 150 ausgeübt, legt sich die Wischleiste 112 an der Scheibe 122 an, wobei ein gleichmäßiger Anpressdruck über die gesamte Wischblattlänge erreicht wird, auch wenn sich die Scheibenkrümmung im Verlauf der Wischbewegung ändert. Hierbei wird eine Auflagekraftverteilung der Wischleiste 112 bzw. der Wischlippe 129 auf der Scheibe 122 erreicht, die von einer bei der Verschweißung der Basisanschlussvorrichtung 160 an den Tragschienen (312, 314 in Fig. 3) in eine zugeordnete Schweißnaht (419, 421 in Fig. 4) eingebrachte Formgebung abhängig ist, wie unten bei Fig. 4 beschrieben.

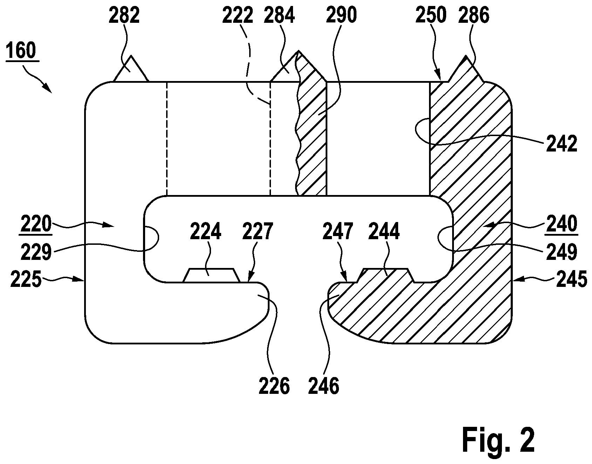

Fig. 2 zeigt eine teilweise geschnittene Vorderansicht der Basisanschlussvorrichtung 160 von Fig. 1 gemäß einer Ausführungsform. Diese weist beispielhaft einen Grundkörper 290 auf, an dem laterale Halteglieder 220, 240 vorgesehen, z. B. angeformt, sind.

In dem Grundkörper 290 sind beispielhaft zwei längliche Durchgriffsöffnungen 222, 242 ausgebildet. An einer Oberseite 250 des Grundkörpers 290 sind illustrativ drei optionale, längliche Energierichtungsgeber 282, 284, 286 vorgesehen, die bei einem Verschweißen der Basisanschlussvorrichtung 160 mit der Adaptereinheit 150 von Fig. 1 Anwendung finden, wie unten bei Fig. 4 beschrieben.

Das laterale Halteglied 220 erstreckt sich illustrativ L-förmig ausgehend von dem Grundkörper 290 und bildet mit diesem eine Nut 229 aus. Gemäß einer Ausführungsform hat das laterale Halteglied 220 einen seitlichen Wandabschnitt 225 und einen unteren Verbindungsabschnitt 226, an dessen dem Grundkörper 290 zugewandter Oberseite 227 ein länglicher Energierichtungsgeber 224 vorgesehen ist.

Das laterale Halteglied 240 erstreckt sich relativ zum Halteglied 220 etwa horizontal gespiegelt L-förmig ausgehend von dem Grundkörper 290 und bildet mit diesem eine Nut 249 aus. Gemäß einer Ausführungsform hat das laterale Halteglied 240 einen seitlichen Wandabschnitt 245 und einen unteren Verbindungsabschnitt 246, an dessen dem Grundkörper 290 zugewandter Oberseite 247 ein länglicher Energierichtungsgeber 244 vorgesehen ist.

Die Basisanschlussvorrichtung 160 wird gemäß einer Ausführungsform mittels Kunststoffspritzen hergestellt, wie oben bei Fig. 1 beschrieben. Hierbei können die Energierichtungsgeber 224, 244 durch einen durch die Durchgriffsöffnungen 222 bzw. 242 durchgreifenden Kernzug bzw. geeignete Konturen eines entsprechenden Spritzgusswerkzeugs unter Vorgabe einer gewünschten Form ausgebildet werden, die in dieser Art und Weise nicht ausgehend von den seitlichen Wandabschnitten 225, 245 der Halteglieder 220 bzw. 240 erzeugbar ist, z. B. in Pyramidenform.

Fig. 3 zeigt illustrativ die Basisanschlussvorrichtung 160 von Fig. 2 beim Verschweißen mit beispielhaften Tragschienen 312, 314 des Wischblatts 100 von Fig. 1, und verdeutlicht die länglichen Durchgriffsöffnungen 222, 242 von Fig. 2, die sich fast vollständig über eine Längserstreckung 399 der Basisanschlussvorrichtung 160 erstrecken können. Im Kontext der vorliegenden Erfindung bedeutet dies, dass die Durchgriffsöffnungen 222, 242 eine Länge 398 aufweisen können, die bevorzugt relativ zur Längserstreckung 399 möglichst groß ist, aber die Stabilität und Funktionalität der Basisanschlussvorrichtung 160 nicht in Frage stellt.

Die Basisanschlussvorrichtung 160 ist gemäß einer Ausführungsform derart an der Wischleiste 112 angeordnet, dass deren Halteglieder 220, 240 die mit Kunststoffummantelungen 313, 315 versehenen Tragschienen 312 bzw. 314 zumindest abschnittsweise krallenartig umgreifen, sodass die an den Haltegliedern 220, 240 vorgesehenen Energierichtungsgeber (224 bzw. 244 in Fig. 2) jeweils einer vom Grundkörper 290 abgewandten Breitseite (463, 473 in Fig. 4) der Tragschiene 312 bzw. 314 zugewandt sind. Hierbei ist die Tragschiene 312 beispielhaft in der Nut 229 und die Tragschiene 314 ist in der Nut 249 der Basisanschlussvorrichtung 160 angeordnet.

Wie bei Fig. 1 beschrieben sind die Tragschienen 312, 314 darüber hinaus in zugeordneten seitlichen Längsnuten der Wischleiste 112 von Fig. 1 angeordnet, die z. B. an deren Rückenleiste 124 ausgebildet sind. Die Rückenleiste 124 ist zwecks Klarheit und Übersichtlichkeit der Zeichnung in Fig. 3 nur schematisch angedeutet, während auf eine Darstellung der übrigen Wischleistenkomponenten zur Vereinfachung der Abbildung verzichtet wurde.

Zum Verschweißen der Basisanschlussvorrichtung 160 mit der Kunststoffummantelung 313, 315 der Tragschienen 312 bzw. 314 werden beispielhaft längliche Schweißwerkzeuge 293, 295 in Richtung eines Pfeils 299 in die länglichen Durchgriffsöffnungen 222 bzw. 242 eingeführt. Hierbei werden die Schweißwerkzeuge 293, 295 zum Erzeugen einer flächigen Schweißnaht (419, 421 in Fig. 4) durch Abschmelzen der Energierichtungsgeber (224, 244 von Fig. 2) bevorzugt durch den Grundkörper 290 bis zu den Tragschienen 312, 314 durchgeführt.

Gemäß einer Ausführungsform wird die Basisanschlussvorrichtung 160 durch Ultraschallschweißen mit den Tragschienen 312, 314 bzw. deren Kunststoffummantelungen 313 bzw. 315 verschweißt. Hierbei finden als Schweißwerkzeuge 293, 295 sogenannte Schwertsonotroden mit gekrümmten bzw. abgerundeten oder geraden bzw, abgeflachten Basisflächen Anwendung.

Fig. 4 zeigt eine teilweise geschnittene Ansicht der an den Tragschienen 312, 314 von Fig. 3 der Wischleiste 112 von Fig. 1 angeschweißten Basisanschlussvorrichtung 160 von Fig. 2. Es wird jedoch darauf hingewiesen, dass zwecks Vereinfachung und Übersichtlichkeit der Zeichnung auf eine vollständige Abbildung der Wischleiste 112 verzichtet wurde und lediglich deren Rückenleiste 124 abschnittsweise schematisch angedeutet ist.

Gemäß einer Ausführungsform weisen die Tragschienen 312, 314 jeweils ein mit der Kunststoffummantelung 313 bzw. 315 versehenes Federelement 412 bzw. 415 auf. Die Federelemente 412, 415 sind z. B. aus Flach- oder Runddraht geformte Federschienen, die beispielsweise aus gehärtetem Stahl, Titan oder Aluminium ausgebildet sind. Alternativ können die Federelemente 412, 415 aus Kunststoff ausgebildet sein.

Die in der Nut 229 der Basisanschlussvorrichtung 160 angeordnete Tragschiene 312 ist bevorzugt bandartig ausgebildet und hat illustrativ eine obere Breitseite 461, eine untere Breitseite 463, eine linke Schmalseite 464 und eine rechte Schmalseite 462. Analog hierzu hat die in der Nut 249 angeordnete Tragschiene 314, die ebenfalls bevorzugt bandartig ausgebildet ist, illustrativ eine obere Breitseite 471, eine untere Breitseite 473, eine linke Schmalseite 474 und eine rechte Schmalseite 472.

Gemäß einer Ausführungsform wurde bei einem wie in Fig. 3 beschrieben ausgeführten Ultraschall-Schweißvorgang zumindest der am Verbindungsabschnitt 226 des lateralen Halteglieds 220 der Basisanschlussvorrichtung 160 vorgesehene, längliche Energierichtungsgeber 224 (Fig. 2) derart abgeschmolzen, dass die Kunststoffummantelung 313 der Tragschiene 312 und der abgeschmolzene Energierichtungsgeber 224 (Fig. 2) eine flächige Schweißnaht 419 ausbilden, die die untere Breitseite 463 der Tragschiene 312 mit dem Verbindungsabschnitt 226 verbindet. Die flächige Schweißnaht 419 erstreckt sich bevorzugt zumindest über die Länge 398 (Fig. 3) der Durchgriffsöffnung 222. Anders ausgedrückt erstreckt sich die flächige Schweißnaht 419 bevorzugt im Wesentlichen bandartig über die der Basisanschlussvorrichtung 160 zugeordnete Längserstreckung 399 (Fig. 3).

Analog hierzu wurde der am Verbindungsabschnitt 246 des lateralen Halteglieds 240 der Basisanschlussvorrichtung 160 vorgesehene, längliche Energierichtungsgeber 244 (Fig. 2) bevorzugt derart abgeschmolzen, dass die Kunststoffummantelung 315 der Tragschiene 314 und der abgeschmolzene Energierichtungsgeber 244 (Fig. 2) eine flächige Schweißnaht 421 ausbilden, die die untere Breitseite 473 der Tragschiene 314 mit dem Verbindungsabschnitt 246 verbindet. Die flächige Schweißnaht 421 erstreckt sich bevorzugt zumindest über die Länge 398 (Fig. 3) der Durchgriffsöffnung 242. Anders ausgedrückt erstreckt sich die flächige Schweißnaht 421 bevorzugt im Wesentlichen bandartig über die der Basisanschlussvorrichtung 160 zugeordnete Längserstreckung 399 (Fig. 3).

Hierbei kann durch eine geeignete Ausgestaltung der Schwertsonotroden 293, 295 von Fig. 3 bzw. von deren Basisflächen ein gewünschtes Profil der Schweißnähte 419 bzw. 421 und somit der Tragschienen 312 bzw. 314 im Bereich der Basisanschlussvorrichtung 160 ausgebildet worden sein. Das gewünschte Profil kann z. B. abgerundet bzw. gekrümmt oder abgeflacht bzw. gerade ausgeführt sein.

Gemäß einer Ausführungsform kann nach einem Verschweißen der Basisanschlussvorrichtung 160 an den Tragschienen 312, 314 die Adaptereinheit 150 von Fig. 1 an der Basisanschlussvorrichtung 160 angeschweißt werden. Die Adaptereinheit 150 hat beispielhaft an ihrer Unterseite 459 zwei Vorsprünge 422, 442, die zum Zentrieren der Adaptereinheit 150 an der Basisanschlussvorrichtung 160 ausgebildet sind. Diese Vorsprünge 422, 442 haben Außenabmessungen, die etwa den Innenabmessungen der Durchgriffsöffnungen 222 bzw. 242 entsprechen. Die Vorsprünge 422, 442 unterteilen die Unterseite 459 in Fig. 4 in drei Abschnitte 451, 453, 455, an denen Energierichtungsgeber ausgebildet sein können. Illustrativ sind an den Abschnitten 451, 455 optionale Energierichtungsgeber 452, 454 ausgebildet. Darüber hinaus können auch an den Vorsprüngen 422, 442 ein oder mehrere Energierichtungsgeber 482, 492 ausgebildet sein.

Zum Verschweißen der Adaptereinheit 150 an der Basisanschlussvorrichtung 160 werden die Vorsprünge 422, 442 in Richtung von Pfeilen 420, 440 in die Durchgriffsöffnungen 222 bzw. 242 eingeführt und greifen somit in diese ein. Dann werden die Energierichtungsgeber 452, 455, 282, 284, 286 in einem geeigneten Schweißvorgang, z. B. einem Ultraschall-Schweißvorgang oder einem alternativen Kunststoff-Fügeverfahren, beispielsweise Laser-Kunststoffschweißen, abgeschmolzen, sodass die Adaptereinheit 150 und die Basisanschlussvorrichtung 160 im Bereich der Abschnitte 451, 453, 455 miteinander verbunden werden. Hierbei kann aufgeschmolzener Kunststoff durch Kapillarwirkung in zwischen den Vorsprüngen 422, 442 und den Durchgriffsöffnungen 222 bzw. 242 auftretende Spalte fließen und somit die Anbindung der Adaptereinheit 150 an die Basisanschlussvorrichtung 160 verbessern. Darüber hinaus werden die Vorsprünge 422, 442 durch ein Abschmelzen der Energierichtungsgeber 482, 492 unter gleichzeitigem Aufschmelzen der Kunststoffummantelungen 313, 315 der Tragschienen 312 bzw. 314 im Bereich der Energierichtungsgeber 482, 492 mit den Kunststoffummantelungen 313 bzw. 315 verschweißt, sodass ein formschlüssiges und im Wesentlichen vollständiges Einbetten der Tragschienen 312, 314 in den Nuten 229 bzw. 249 erreicht wird.

Es wird darauf hingewiesen, dass die oben beschriebene Verwendung der Energierichtungsgeber 452, 455, 282, 284, 286 sowie 224, 244 von Fig. 2 lediglich beispielhaften Charakter hat und nicht als Einschränkung der Erfindung zu verstehen ist, die ebenfalls ohne die Verwendung derartiger Energierichtungsgeber ausführbar ist. Beispielsweise kann beim Verschweißen jeweils ein geeignetes, aufschmelzendes Zusatzmaterial zur Schmelzeerzeugung Anwendung finden. Allerdings ist die Verwendung der Energierichtungsgeber vorteilhaft, um eine verbesserte Schmelzeerzeugung bei der Verschweißung zu erreichen.

## Patentansprüche

1. Wischblatt (100) für einen Scheibenwischer, mit einer Wischleiste (112), an der mindestens eine Tragschiene (312, 314) angeordnet ist, die ein mit einer Kunststoffummantelung (313, 315) versehenes Federelement (412, 415) aufweist, und mit einer Basisanschlussvorrichtung (160), die Kunststoff aufweist und an die Kunststoffummantelung (313, 315) angeschweißt ist, wobei zwischen der Basisanschlussvorrichtung (160) und der mindestens einen Tragschiene (312, 314) eine flächige Schweißnaht (419, 421) ausgebildet ist und die Basisanschlussvorrichtung (160) einen Grundkörper (290) aufweist, an dem laterale Halteglieder (220, 240) vorgesehen sind, die die mindestens eine Tragschiene (312, 314) zumindest abschnittsweise krallenartig umgreifen, wobei der Grundkörper (290) mindestens eine Durchgriffsöffnung (222, 242) aufweist, die dazu ausgebildet ist, bei einem Verschweißen der Basisanschlussvorrichtung (160) mit der Kunststoffummantelung (313, 315) der mindestens einen Tragschiene (312, 314) ein Durchführen eines Schweißwerkzeugs (293, 295) durch den Grundkörper (290) bis zur mindestens einen Tragschiene (312, 314) zu ermöglichen, **dadurch gekennzeichnet, dass** an der Basisanschlussvorrichtung (160) eine Kunststoff aufweisende Adaptereinheit (150) zur Anlenkung der Wischleiste (112) an einem Wischerarm (118) angeschweißt ist, wobei die Adaptereinheit (150) zur Verbindung mit einem dem Wischerarm (118) zugeordneten Anschlussglied (190) ausgebildet ist und mindestens einen in die mindestens eine Durchgriffsöffnung (222, 242) eingreifenden Vorsprung (422, 442) aufweist..

2. Wischblatt nach Anspruch 1, **dadurch gekennzeichnet, dass** die flächige Schweißnaht (419, 421) sich im Wesentlichen bandartig über eine der Basisanschlussvorrichtung (160) zugeordnete Längserstreckung (399) erstreckt.

3. Wischblatt nach Anspruch 1 oder 2, **dadurch gekennzeichnet, dass** die mindestens eine Tragschiene (312, 314) bandartig mit Breitseiten (461, 463, 471, 473) und Schmalseiten (462, 464, 472, 474) ausgebildet ist, wobei die flächige Schweißnaht (419, 421) an einer der Breitseiten (461, 463, 471, 473) ausgebildet ist.

4. Wischblatt nach einem der vorhergehenden Ansprüche, **dadurch gekennzeichnet, dass** die flächige Schweißnaht (419, 421) zwischen einer vom Grundkörper (290) abgewandten Breitseite (463, 473) der mindestens einen Tragschiene (312, 314) und einem der Tragschiene (312, 314) zugewandten Verbindungsabschnitt (226, 246) des lateralen Halteglieds (220, 240) ausgebildet ist.

5. Wischblatt nach einem der vorhergehenden Ansprüche, **dadurch gekennzeichnet, dass** die mindestens eine Tragschiene (312, 314) durch Ultraschallschweißen mit der Basisanschlussvorrichtung (160) verschweißt ist.

## Claims

1. Wiper blade (100) for a windscreen wiper, having a wiper strip (112), on which at least one loadbearing rail (312, 314) is arranged which has a spring element (412, 415) which is provided with a plastic covering (313, 315), and having a base connection device (160) which has plastic and is welded to the plastic covering (313, 315), wherein a flat welded seam (419, 421) is formed between the base connection device (160) and the at least one loadbearing rail (312, 314) and the base connection device (160) has a basic body (290), on which lateral holding members (220, 240) are provided which engage in a claw-like manner at least in sections around the at least one loadbearing rail (312, 314), wherein the basic body (290) has at least one through-passage opening (222, 242) which is formed for making it possible to guide a welding tool (293, 295) through the basic body (290) as far as the at least one loadbearing rail (312, 314) during welding of the base connection device (160) to the plastic covering (313, 315) of the at least one loadbearing rail (312, 314), **characterized in that** an adapter unit (150) which has plastic is welded to the base connection device (160) in order to articulate the wiper strip (112) on a wiper arm (118), the adapter unit (150) being configured for connection to a connection member (190) which is assigned to the wiper arm (118) and having at least one projection (422, 442) which engages into the at least one through-passage opening (222, 242).

2. Wiper blade according to Claim 1, **characterized in that** the flat welded seam (419, 421) extends in a substantially tape-like manner over a longitudinal extent (399) which is assigned to the base connection device (160).

3. Wiper blade according to Claim 1 or 2, **characterized in that** the at least one loadbearing rail (312, 314) is formed in a tape-like manner with broad sides (461, 463, 471, 473) and narrow sides (462, 464, 472, 474), the flat welded seam (419, 421) being formed on one of the broad sides (461, 463, 471, 473).

4. Wiper blade according to one of the preceding claims, **characterized in that** the flat welded seam (419, 421) is formed between a broad side (463, 473), facing away from the basic body (290), of the at least one loadbearing rail (312, 314) and a connecting section (226, 246), facing the loadbearing rail (312, 314), of the lateral holding member (220, 240).

5. Wiper blade according to one of the preceding claims, **characterized in that** the at least one loadbearing rail (312, 314) is welded to the base connection device (160) by ultrasonic welding.

## Revendications

1. Balai d'essuie-glace (100) pour un essuie-glace, comprenant une raclette de balai d'essuie-glace (112) sur laquelle est disposé au moins un rail de support (312, 314) qui comprend un élément ressort (412, 415) doté d'une gaine en matière synthétique (313, 315), et un dispositif de raccordement de base (160) qui comprend une matière synthétique et qui est soudé sur la gaine en matière synthétique (313, 315), dans lequel un joint de soudure plan (419, 421) est formé entre le dispositif de raccordement de base (160) et l'au moins un rail de support (312, 314) et le dispositif de raccordement de base (160) comprend un corps de base (290) sur lequel sont prévus des organes de retenue latéraux (220, 240) qui viennent en prise, au moins dans certaines parties, en forme de griffe autour de l'au moins un rail de support (312, 314), dans lequel le corps de base (290) comprend au moins une ouverture de passage (222, 242) qui est réalisée pour permettre un passage d'un outil de soudage (293, 295) à travers le corps de base (290) jusqu'audit au moins un rail de support (312, 314) lors d'un soudage du dispositif de raccordement de base (160) sur la gaine en matière synthétique (313, 315) de l'au moins un rail de support (312, 314), **caractérisé en ce qu'**une unité d'adaptateur (150) comprenant une matière synthétique pour l'articulation de la raclette de balai d'essuie-glace (112) sur un bras d'essuie-glace (118) est soudée sur le dispositif de raccordement de base (160), l'unité d'adaptateur (150) étant réalisée pour la liaison à un organe de raccordement (190) associé au bras d'essuie-glace (118) et comprenant au moins une saillie (422, 442) venant en prise dans l'au moins une ouverture de passage (222, 242).

2. Balai d'essuie-glace selon la revendication 1, **caractérisé en ce que** le joint de soudure plan (419, 421) s'étend sensiblement en forme de bande sur une étendue longitudinale (399) associée au dispositif de raccordement de base (160).

3. Balai d'essuie-glace selon la revendication 1 ou 2, **caractérisé en ce que** l'au moins un rail de support (312, 314) est réalisé en forme de bande avec des côtés larges (461, 463, 471, 473) et des côtés étroits (462, 464, 472, 474), le joint de soudure plan (419, 421) étant réalisé sur l'un des côtés larges (461, 463, 471, 473).

4. Balai d'essuie-glace selon l'une des revendications précédentes, **caractérisé en ce que** le joint de soudure plan (419, 421) est réalisé entre un côté large (463, 473), opposé au corps de base (290), de l'au moins un rail de support (312, 314) et une partie de liaison (226, 246), tournée vers le rail de support (312, 314), de l'organe de retenue latéral (220, 240).

5. Balai d'essuie-glace selon l'une des revendications précédentes, **caractérisé en ce que** l'au moins un rail de support (312, 314) est soudé sur le dispositif de raccordement de base (160) par soudage par ultrasons.
